# EUROPEAN PATENT SPECIFICATION

(11) **EP 3 267 763 B1**
(45) Date of publication and mention of the grant of the patent: **08.09.2021**
(21) Application number: 16758431.7
(22) Date of filing: 15.02.2016
(51) Int. Cl.: H04W 16/14, H04W 88/16, H04W 84/04, H04W 84/22

(54) **COMMUNICATION SYSTEM AND COMMUNICATION METHOD**
KOMMUNIKATIONSSYSTEM UND KOMMUNIKATIONSVERFAHREN
SYSTÈME DE COMMUNICATION ET PROCÉDÉ DE COMMUNICATION

(30) Priority: 05.03.2015 CN 201510098536
(43) Date of publication of application: 10.01.2018
(73) Proprietor: Datang Mobile Communications Equipment Co., Ltd., Beijing 100085 (CN)
(72) Inventor: JIAO, Bin, Beijing 100191 (CN); CHEN, Li, Beijing 100191 (CN); QIN, Fei, Beijing 100191 (CN)
(74) Representative: dompatent von Kreisler Selting Werner - Partnerschaft von Patent- und Rechtsanwälten mbB
(86) International application number: PCT/CN2016/073814
(87) International publication number: WO 2016/138815

(56) References cited:
- WO-A2-2013/170169
- WO-A2-2013/170169
- CN-A- 1 547 411
- CN-A- 101 610 594
- CN-A- 102 711 118
- US-A1- 2008 130 598
- US-A1- 2014 321 282

## Description

### TECHNICAL FIELD

The present disclosure relates to the field of wireless communication technology, in particular to a communication system, and a communication method.

### BACKGROUND

Currently, a Bluetooth technology has been widely used in short-range communication (e.g., a sensor network).

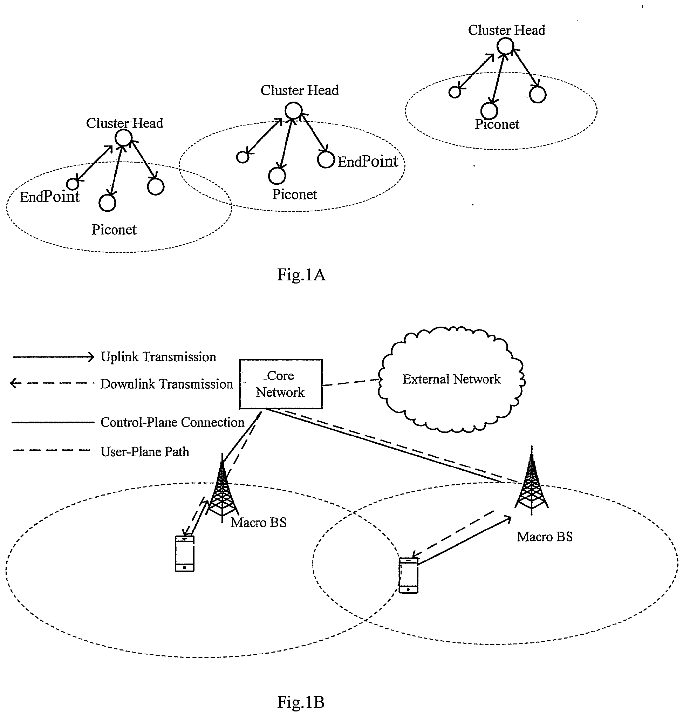

As shown in Fig.1A, for a Bluetooth system with a MESH (self-organizing or infrastructureless) network model, a cluster head and a series of End Points form a cluster, and the communication among the End Points within the cluster is controlled by a cluster head device. The communication within the cluster may adopt a 2.4GHz common frequency band, and interference may be prevented in a frequency hopping manner. Statically-configured channels and security parameters are adopted between the cluster head and the End Points. The clusters are independent of each other, and End Point members belong to different clusters cannot communicate with each other.

As shown in Fig.1B, in a conventional cellular system, a terminal determine a serving base station in accordance with strength of a downlink pilot signal, and the serving base station takes charge of providing a data transmission service for an access terminal. The serving base station forwards uplink data received from the terminal to a core network, and then the core network takes charge of providing a connection service to an external network for the access terminal.

Currently, in the sensor network, the cluster head device communicates with the End Point at a common frequency, so the communication may be easily interfered with a neighboring Wireless Fidelity (WiFi) system, resulting in insufficient reliability. In addition, the conventional sensor network is not aided by the core network, so merely a static security parameter may be adopted, and it is impossible to provide a Quality of Service (QoS) guarantee.

In a word, for the conventional MESH network, the support for mobility is insufficient, and for the cellular access network, its reliability as well as the spectrum utilization flexibility are also insufficient.

US 2014/321282 A1 discusses a method which includes transmitting and receiving data to and from one or more wireless transmit/receive units (WTRUs) via an underlay system access link.

US 2008/130598 A1 discusses a mesh network communication system that includes a plurality of access points connected to a wireless local area network (WLAN) controller where at least one of the plurality access points is a detection access point (DAP) that receives reverse link (RL) wireless wide area network (WWAN) signals transmitted from a multi-mode wireless communication device.

### SUMMARY

An object of the present disclosure is to provide a communication system and a communication method, so as to improve the support of the MESH network for the mobility and improve the reliability as well as the spectrum utilization flexibility of the cellular access network.

In one aspect, the present disclosure provides in some embodiments a communication system, including a MESH access network, a cellular access network, a backhaul network and a core network. The MESH access network is connected to the core network through the backhaul network, and the cellular access network is connected to the core network through the backhaul network. The MESH access network includes a plurality of clusters, and each cluster includes at least one Distributed Service Center (DSC) and at least one End Point (EP). The cellular access network includes a plurality of local access networks, and each local access network includes at least one Local Service Center (LSC) and at least one base station and/or at least one Access Point (AP). The core network includes at least one Network Service Center (NSC). The DSC is connected to each EP in a corresponding cluster, and configured to transmit information related to the EP in the corresponding cluster between the DSC and the core network through the backhaul network. The LSC is configured to transmit information related to a specific access device between the LSC and the core network through the backhaul network, and the specific access device is an access device that has accessed a base station or AP connected to the LSC. The NSC is configured to transmit information received from the DSC and/or the LSC to the core network through the backhaul network; wherein the DSC is further configured to notify interference information measured by the DSC or by the EP in the cluster to the LSC of the cellular access network which is located adjacent to the MESH access network or has an overlapped coverage with the MESH access network, and the LSC is configured to control a transmission power on the basis of the interference information.

In a possible embodiment of the present disclosure, the clusters are capable of overlapping each other, the local access networks are capable of overlapping each other, and the local access network and the cluster are capable of overlaying each other.

In a possible embodiment of the present disclosure, the MESH access network and the cellular access network use a dedicated frequency for a traditional cellular system or any other public frequency.

In a possible embodiment of the present disclosure, the DSC is further configured to manage the EP in the corresponding cluster, coordinate the communication between the corresponding cluster and an adjacent cluster, and perform interference management.

In a possible embodiment of the present disclosure, the LSC is further configured to perform connection management and transmission management over the specific access device.

In a possible embodiment of the present disclosure, the transmission management includes parts or all of the followings: cross-base-station and/or cross-AP interference management; interference coordination or wireless resource coordinate between the local access cellular networks which are adjacent or have an overlapped coverage; wireless resource configuration and/or transmission parameter configuration in a multi-base-station and/or multi-AP transmission mode; and wireless resource coordination between the MESH access networks which are adjacent or have an overlapped coverage.

In a possible embodiment of the present disclosure, the NSC is further configured to: authenticate the DSC and/or the LSC, and after the DSC and/or the LSC have been authenticated successfully, establish a secure tunnel between the core network and the DSC and/or between the core network and the LSC for the data transmission through the backhaul network; and manage the EP connected to the DSC and the specific access device at a service layer and an identity layer.

In still yet another aspect, the present disclosure provides in some embodiments a communication method for a communication system including a MESH access network, a cellular access network, a backhaul network and a core network, including steps of: transmitting, by a DSC of the MESH access network, information related to an EP in a corresponding cluster between the DSC and the core network through the backhaul network, the DSC being connected to each EP in the corresponding cluster; transmitting, by an LSC of the cellular access network, information related to a specific access device between the LSC and the core network through the backhaul network, the specific access device being an access device that has accessed a base station or AP connected to the LSC; transmitting, by an NSC of the core network, the information received from the DSC and/or the LSC to the core network through the backhaul network; notifying, by the DSC, interference information measured by the DSC or by the EP in the cluster to the LSC of the cellular access network which is located adjacent to the MESH access network or has an overlapped coverage with the MESH access network, and controlling a transmission power on the basis of the interference information by the LSC.

According to the embodiments of the present disclosure, through the combination of a traditional MESH network technology and a cellular network technology, it is able to improve the reliability, the security, the QoS guarantee and the support of mobility of the MESH network. Through the combination of the cellular access network and the MESH access network, it is able to further improve the reliability and the spectrum utilization flexibility of the cellular access network. In addition, through the combination of the MESH access network and the cellular access network, it is able to make up for performance deficiencies of a pure MESH system and a pure cellular system in a better manner.

### BRIEF DESCRIPTION OF THE DRAWINGS

Fig.1A is a schematic view showing a conventional MESH network;
Fig.1B is a schematic view showing a conventional cellular network;
Fig.2 is a schematic view showing a wireless communication system according to one embodiment of the present disclosure;
Fig.3 is a schematic view showing a MESH access network in the wireless communication system according to one embodiment of the present disclosure;
Fig.4 is a schematic view showing a cellular access network in the wireless communication system according to one embodiment of the present disclosure;
Fig.5 is a schematic view showing a DSC according to one embodiment of the present disclosure;
Fig.6 is a schematic view showing an LSC according to one embodiment of the present disclosure;
Fig.7 is a schematic view showing an NSC according to one embodiment of the present disclosure;
Fig.8 is another schematic view showing the DSC according to one embodiment of the present disclosure;
Fig.9 is another schematic view showing the LSC according to one embodiment of the present disclosure; and
Fig. 10 is another schematic view showing the NSC according to one embodiment of the present disclosure.

### DETAILED DESCRIPTION OF THE EMBODIMENTS

The present disclosure provides in some embodiments a communication system, including a MESH access network, a cellular access network, a backhaul network and a core network. The MESH access network is connected to the core network through the backhaul network, and the cellular access network is connected to the core network through the backhaul network. According to the embodiments of the present disclosure, through the combination of a traditional MESH network technology and a cellular network technology, it is able to improve the reliability, the security, the QoS guarantee and the support of mobility of the MESH network. Through the combination of the cellular access network and the MESH access network, it is able to further improve the reliability and the spectrum utilization flexibility of the cellular access network. In addition, through the combination of the MESH access network and the cellular access network, it is able to make up for performance deficiencies of a pure MESH system and a pure cellular system in a better manner.

A traditional MESH network has such characteristics as supporting air-interface multi-hopping and direct communication between devices through an air interface. Apart from the characteristics of the traditional MESH network, the MESH access network in the embodiments of the present disclosure may also be self-organized and infrastructureless.

The present disclosure will be described hereinafter in conjunction with the drawings and embodiments.

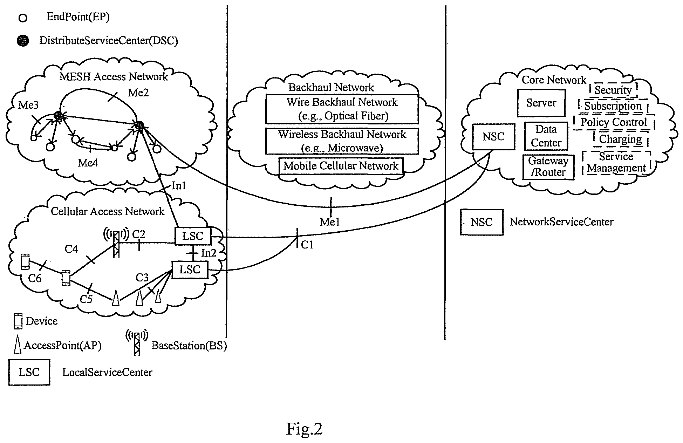

As shown in Fig.2, the present disclosure provides in some embodiments a wireless communication system, including a MESH access network, a cellular access network, a backhaul network and a core network. The MESH access network is connected to the core network through the backhaul network, and the cellular access network is connected to the core network through the backhaul network. The backhaul network includes a wired backhaul network, a wireless backhaul network and a mobile cellular backhaul network. The core network consists of various dedicated or general-purpose devices such as server, data center and router, and it takes charge of performing subscription management on various access devices, subscriber identification, authentication, policy control, charge management and business management.

The MESH access network is mainly configured to provide services for a Machine Type Communication (MTC) device. An EP in the MESH access network may be bound to a sensor (e.g., a temperature sensor, a pressure sensor or a camera), or an actuator (e.g., an accelerator, a brake, a steering gear, or a mechanical arm), or a physical entity (e.g., a vehicle, a bike, a helmet, a spectacle, a smart watch, or an unmanned aerial vehicle).

The cellular access network is mainly configured to provide an access service for a traditional handheld or on-board access device or Modem. In addition, the cellular access network may also provide a signaling/data backhaul service from the MESH access network to the core network.

Prior to the description on system architecture, various interfaces in the drawings will be described as follows. Me1 interface is an interface between a DSC and an NSC. Me2 interface is an interface between the DSCs. Me3 interface is an interface between the DSC and an EP. Me4 interface is an interface between the EPs. C1 interface is an interface between an LSC and the NSC. C2 interface is an interface between the LSC and a base station. C3 interface is an interface between the LSC and an AP. C4 interface is an interface between the base station and a device. C5 interface is an interface between the AP and the device. C6 interface is an interface between the devices. In1 interface is an interface between the DSC and the LSC. In2 interface is an interface between the LSCs.

The MESH access network includes at least one DSC and at least one EP. The cellular access network includes at least one LSC, and at least one base station and/or at least one AP. The core network includes at least one NSC.

Various entities will be described hereinafter.

### 1. EP

The EP is a module having a communication function and capable of being bound to a specific physical device, e.g., a sensor, an actuator, an accelerator, a brake, a mechanical arm, an aircraft, a vehicle, a bike, a security helmet, a smart spectacle or a smart watch. Depending on different specific physical devices, the EPs having different communication functions may be selected. Usually, the EP is applied to a communication scenario for a short range (e.g., smaller than 100m) and a low data rate (e.g., smaller than 1000 bits/s). Of course, the EP in the embodiments of the present disclosure may also be applied to a scenario for a long range and a high data date.

### 2. DSC

The DSC is connected to each EP in a corresponding cluster and configured to transmit information related to the EP in the corresponding cluster between the DSC and the core network through the backhaul network. In the embodiments of the embodiments, the DSC and the neighboring EPs connected to the DSC together form a cluster.

In a possible embodiment of the present disclosure, the DSC is further configured to manage and maintain the cluster. To be specific, the DSC may manage the EP in the corresponding cluster, coordinate the communication between the corresponding cluster and an adjacent cluster, and perform interference management.

The DSC is further configured to, in the case that the MESH access network shares a wireless resource with another wireless network, coordinate the interference between the MESH access network and a wireless resource control entity of an inter-system which is located adjacent to the MESH access network or has an overlapped coverage to the MESH access network, and perform cross-system communication with the inter-system.

For example, the DSC may notify time/frequency information about a wireless resource allocated for inter-cluster communication to the neighboring DSCs or LSCs. Correspondingly, the neighboring DSCs or LSCs may not perform the communication at an identical time or frequency.

The DSC may further notify interference information measured by itself or by the EP in the cluster to the neighboring DSCs or LSCs. Correspondingly, in the case that the communication with the other clusters or local access networks is interfered by the neighboring DSCs or LSCs, the neighboring DSCs or LSCs may reduce their transmission power, so as to reduce the interference.

For the management of a service layer and cluster members, the DSC may take part in the maintenance of a member list, authenticate the cluster member, and take part in the maintenance of a device type and a service requirement associated with the EP.

For the MESH access network, the DSC may, as a control point of the cluster, coordinate the communication between the cluster and the other neighboring clusters, and perform interference management.

For cross-system collaboration, in the case that the MESH access network shares a wireless resource with the other wireless network (e.g., the cellular access network), the DSC may further coordinate the interference between the MESH access network and a wireless resource control entity of an inter-system which is located adjacent to the MESH access network or has an overlapped coverage to the MESH access network, and perform cross-system communication with the inter-system (e.g., the DSC may coordinate the base station to perform the interference management).

### 3. LSC

The LSC is configured to transmit information related to a specific access device between the LSC and the core network through the backhaul network, and the specific access device is an access device that has accessed a base station or AP connected to the LSC.

In a possible embodiment of the present disclosure, the LSC is further configured to perform connection management and transmission management over the specific access device.

In a possible embodiment of the present disclosure, the transmission management includes parts or all of the followings: cross-base-station and/or cross-AP interference management; interference coordination or wireless resource coordinate between the local access cellular networks which are adjacent or have an overlapped coverage; wireless resource configuration and/or transmission parameter configuration in a multi-base-station and/or multi-AP transmission mode; and wireless resource coordination between the MESH access networks which are adjacent or have an overlapped coverage.

For example, the LSC may notify a wireless resource allocated for the communication with the local access network to the neighboring DSCs or LSCs. Correspondingly, the neighboring DSCs or LSCs may not perform the communication at an identical time or frequency.

The LSC may further notify interference information measured by an AP, a base station (BS) and an access device in the local access network to the neighboring DSCs or LSCs. Correspondingly, in the case that the neighboring DSCs or LSCs determine that the communication with the other clusters or local access networks is interfered by the neighboring DSCs or LSCs, the neighboring DSCs or LSCs may reduce their transmission power, so as to reduce the interference.

In the embodiments of the present disclosure, the cellular access network may consist of a plurality of cellular local access networks capable of overlapping each other. The base station in the cellular access network may be of various types.

The LSC and the base station or the AP may together form the cellular local access network. In the case that the cellular local access network consists of the LSC and the base station, it may be used to provide a wide-area coverage for a specific geographical region. In the case that the cellular local access network consists of the LSC and the AP, it may provide a capacity enhancement service for a hotspot. The cellular access network may consist of a plurality of cellular local access networks capable of overlapping each other.

### 4. BS

The BS and the LSC together forms the cellular local access network (a macro network layer), and is configured to provide a wide-area coverage service to a specific geographical region, so as to ensure that the access device is capable of achieving a seamless connection experience all the time during the movement thereof.

To be specific, the BS may have parts or all of the following functions: a function of controlling a wireless access progress; a baseband processing function associated with wireless transmission at a physical layer; a function of scheduling a wireless resource and configuring a transmission parameter for single-cell transmission; and a function of broadcasting a multi-cast transmission service for devices within the wide-area coverage through a broadcasting channel.

### 5. AP

The AP and the LSC together form the cellular local access network (a hotspot network layer), and it is configured to provide a capacity service for a hotspot area, so as to increase a data transmission rate for the access device. The AP itself may be considered as a low-cost base station where functions and hardware capabilities are tailored.

To be specific, the AP may have parts or all of the following functions: a function of controlling the wireless access progress; a baseband processing function associated with the wireless transmission at the physical layer; a function of scheduling the wireless resource and configuring the transmission parameter for the single-cell transmission; and a function of selecting a silent mode in the case of no access from any device so as to reduce the power consumption.

### 6. Device

The device may be a terminal, a Modem, or any other device capable of accessing a network through the cellular access network.

In a possible embodiment of the present disclosure, the device itself may further provide a relay service for the MESH access network to the core network or an external network.

In a possible embodiment of the present disclosure, the device may support an access to the cellular network (e.g., at a distance of more than 1500m from an antenna of the base station) in the case that the device moves at a high speed (e.g., more than 500km/h), and support a very high data transmission rate (e.g., more than 1Gbps).

In a possible embodiment of the present disclosure, the device may receive broadcasting service information through a system broadcasting channel.

In a possible embodiment of the present disclosure, the device may access to the cellular network to acquire a data transmission service.

In a possible embodiment of the present disclosure, direct communication may be performed between the devices.

### 7. NSC

The NSC is configured to transmit the information received from the DSC and/or the LSC to the core network through the backhaul network. In other words, for the connection management, the NSC is the terminal node of the control plane connection between the MESH access network/ the cellular access network and the core network.

In a possible embodiment of the present disclosure, for the security at the network layer, the NSC may be configured to authenticate the DSC and the LSC, and establish a secure tunnel.

To be specific, the NSC may authenticate the DSC and/or the LSC, and after the DSC and/or the LSC have been authenticated successfully, establish the secure tunnel for the data transmission through the backhaul network.

For example, the NSC may authenticate the DSC and/or the LSC through a certificate mechanism, and establish an IPsec secure channel, so as to ensure the security of the interfaces Me1 and C1.

In a possible embodiment of the present disclosure, the NSC may further manage the EP connected to the DSC and the specific access device at a service layer and an identity layer.

In a possible embodiment of the present disclosure, the NSC may further process control plane signaling received from the MESH access network and the cellular access network, including authenticating the EP and the device, authenticating and activating a device type and a service type associated with the EP, and activating a conversation between the device and a specific external network.

For example, the NSC may manage state information about the EP, including performing track management (managing information about the cluster which the EP has currently accessed), conversation management (e.g., a service currently activated by the EP), and identity management (e.g., managing types of a device and a service subscribed by the EP).

During the implementation, the NSC is a centralized control unit, and the LSC and the DSC are both distributed control units.

In a possible embodiment of the present disclosure, for the management, the LSC and the DSC may control local functions where a time delay is highly demanded, and the NSC may control overall functions where the time delay is not highly demanded but the security is highly demanded.

For example, the LSC may manage the cluster members, and store therein information about the current cluster members, including allocating a temporary identifier for each cluster member, allocating the wireless resources for the inter-cluster communication, and managing a format of an air-interface frame in the cluster as well as basic parameters of an air interface.

The DSC may manage the local access networks, including maintaining lists of APs and BSs of the local access network, establishing and maintaining a reliable connection with the APs and the BSs, allocating and coordinating the wireless resources for inter-AP or inter-BS communication, and performing link management on the devices which have accessed the APs and the BSs. The DSC may further control the selection of user-plane data forwarding path for the APs and the BSs, and configure for the APs and BSs an air-interface frame structure, a frame configuration parameter, a transmission scheme at a Media Access Control (MAC) layer, and high-layer protocol stack architecture.

During the implementation, the core network itself may be provided with one or more NSCs, and these NSCs are co-equal. At an access network side, due to the distributed access networks, the LSCs may be deployed in accordance with a geographical region, a coverage range, and a type of a capacity improvement region. Each LSC region is controlled by one LSC, and the different LSCs are also co-equal without any hierarchical relationship thereamong (no matter whether the LSCs are configured to control a macro base station or an AP).

The clusters in the MESH access network are capable of overlapping each other, the local access networks in the cellular access network are capable of overlapping each other, and the local access network and the cluster are capable of overlapping each other too.

In a possible embodiment of the present disclosure, the MESH access network and the cellular access network may use a dedicated frequency of a traditional cellular system or any other public frequency. For example, the dedicated frequency of the traditional cellular system could be assigned to different operators for specific cellular systems, e.g., a Code Division Multiple Access (CDMA) system, a Wireless CDMA (WCDMA) system, a Long Term Evolution (LTE) system or a Time Division-LTE (TD-LTE) system. The public frequency may include frequency resources shared by a plurality of wireless communication systems with identical or different models.

The networks will be described hereinafter in more details.

### 1. MESH access network

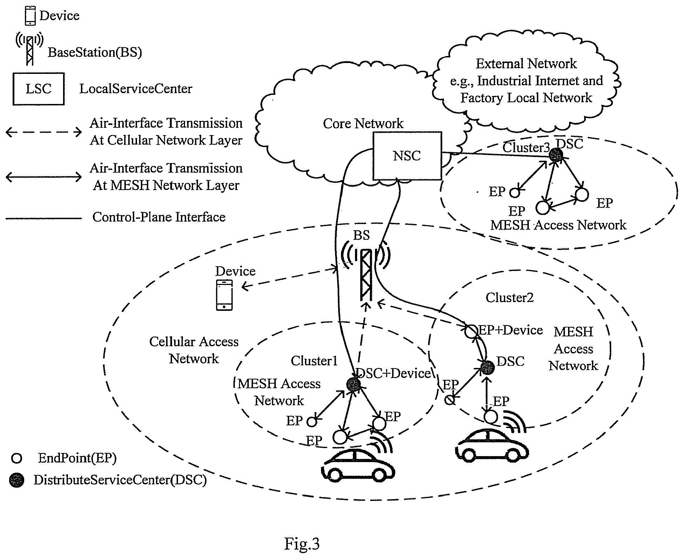

As shown in Fig.3, the MESH access network may consist of a plurality of independent clusters, and each cluster includes one DSC and several EPs. The MESH access network may be formed in a dynamical, self-organizing manner, and consist of devices adjacent to each other. The MESH access network is mainly applied to a short-range communication scenario, e.g., in the case that a maximum distance between the DSC and the EP in the cluster does not exceed 50m or 100m. In addition, an identical physical-layer processing procedure may be used for a two-way communication link between the DSC and the EP and a direct communication link between the EPs, so as to reduce the implementation complexity and cost of the EPs.

The DSC may manage the EPs in the current cluster, and allocate the transmission resources for the communication between the EP and the DSC in the cluster and the communication between the EPs.

In addition, the DSC may coordinate the interference between the clusters. The DSC itself is an aggregation of character and function, rather than a specific device entity. It may be a special EP or device with a strong hardware capability.

In the case that the MESH access network and the cellular access network shares an identical frequency, the DSC may be configured to coordinate the wireless resources between the MESH access network and an adjacent cellular access network.

For data forwarding, the EP or DSC capable of accessing the backhaul network may be configured to provide data forwarding or relay services for any other members in the MESH access network. A control-plane Me1 interface may be established between the DSC and the NSC through the data forwarding services from the members in the MESH access network. A connection between the DSC/EP and the external network may be established through the data forwarding services from the members in the MESH access network.

For data routing, in the case that the data needs to be routed from the MESH access network to the external network and there is a direct communication link between the MESH access network and the external network (e.g., industrial Internet or a factory local network), the data may be directly forwarded from the MESH access network to the external network through a local gateway of the MESH access network. In the case that there is no direct communication link between the MESH access network and the external network, the data may be routed from the MESH access network to the external network through a data forwarding function of the core network.

### 2. Cellular access network

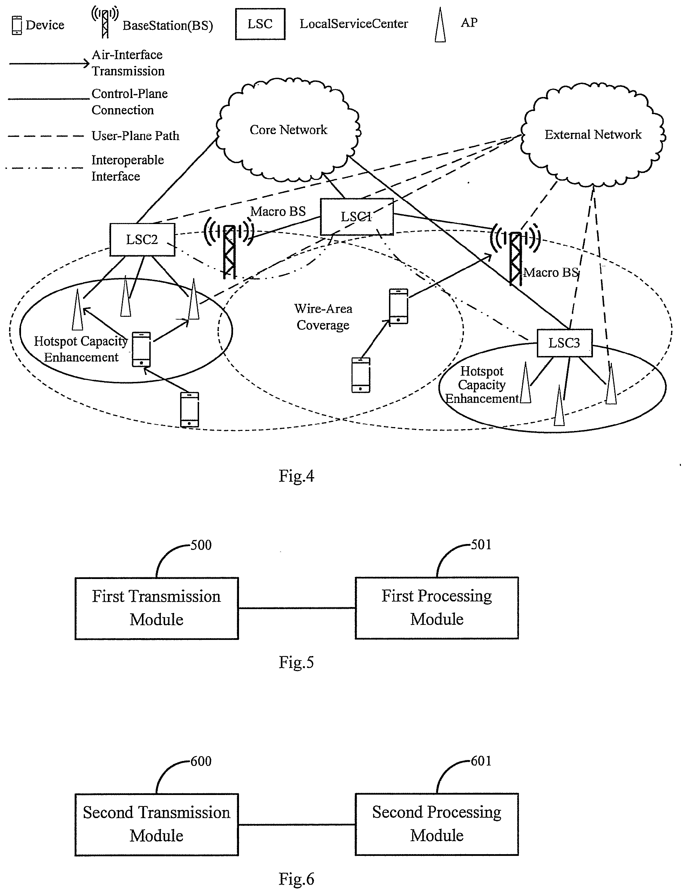

As shown in Fig.4, a cellular local access network (a micro network portion) may consist of one LSC and several APs, and it may be configured to enhance a capacity of a hotspot region and provide a high data transmission rate for an access terminal. A cellular local access network (a macro network portion) may consist of one LSC and several BSs, and it may be configured to provide a seamless, wide-area coverage range. The cellular local access networks may overlap each other, and the cellular local network and the MESH local network may overlap each other too. For an LSC region where the coverage ranges overlap each other, the interference coordination and resource coordination may be performed between the LSCs through an interoperable interface.

The LSC may allocate the wireless resources and configure the transmission parameter in LSC controlled local cellular network which includes multiple APs and multiple base stations. During the implementation, the multi-AP and multi-base-station transmission mode may be used for a specific device (a unicasting mode), or for a group of specific devices (a multicasting mode), or for all the devices within the coverage range (a broadcasting mode). The LSC may provide a link management function for the access device.

The LSC may coordinate the interference and the wireless resources between a current cellular local access network and an adjacent cellular local access network, and an In2 interface may be established between the LSCs so as to achieve the signaling interaction for relevant functions.

In the case that the cellular access network and the MESH access network share an identical spectrum resource, the LSC may coordinate the wireless resource with the DSC in the adjacent MESH access network, and the In1 interface may be established between the LSC and the DSC so as to achieve the signaling interaction for relevant functions.

The base station and the AP may process a terminal access procedure, a physical-layer baseband processing procedure related to the data transmission, and a high-layer user-plane data processing procedure. The base station and AP may further, in the case of single-base-station and/or single-AP transmission, allocate the wireless transmission resources for the terminal, and configure the transmission parameter. In the multi-base-station and/or multi-AP transmission modes, the base station and the AP may transmit data to or receive data from the access device in accordance with the allocation of the wireless resources and the configuration of the transmission parameter acquired from the LSC.

The device may transmit data to and receive data from one or several base stations or APs in accordance with the wireless transmission resources and the transmission parameters acquired from the cellular access network. The device may further transmit data to and receive data from another device in accordance with the wireless transmission resources and the transmission parameters acquired from the cellular access network. In addition, the device may provide a relay service for the other device to the cellular access network, or a relay service for the MESH access network to the core network.

For the user-plane data forwarding, the device may support the data forwarding procedures for the AP, the BS and the LSC. The details are related to the user-plane forwarding mode, the connection relationship between the device and the external network, and the transmission mode adopted by the access device.

### 3. Core network

The core network may consist of a NSC and a series of servers, data centers, gateways and routers.

The NSC, as a special server, may be configured as terminal node for the Me1 and C1 interface between the access networks. The NSC may authenticate the DSC and the LSC which have initiated a connection establishment request, and establish a secure end-to-end transmission tunnel between the NSC and the DSC/LSC which has been authenticated successfully.

In a possible embodiment of the present disclosure, the functions of the core network, such as subscription management, security management, policy control, charging management and service management, may be configured on different serves and data centers through network function virtualization (NFV), so as to optimize the utilization of hardware resources of the core network to the greatest extent.

As shown in Fig.5, the present disclosure provides in some embodiments a DSC, including: a first transmission module 500 configured to transmit or receive information related to an EP; and a first processing module 501 configured to control the first transmission module 500 to transmit the information related to the EP in a corresponding cluster between a MESH access network and a core network through a backhaul network. The DSC corresponds to at least one cluster, and each EP in the cluster corresponding to the DSC is connected to the DSC.

In a possible embodiment of the present disclosure, the first processing module 501 is further configured to manage the EP in the corresponding cluster, coordinate the communication between the corresponding cluster and an adjacent cluster, and perform interference management.

In a possible embodiment of the present disclosure, the first processing module 501 is further configured to, in the case that the MESH access network shares a wireless resource with another wireless network, coordinate the interference between the MESH access network and a wireless resource control entity of an inter-system which is located adjacent to the MESH access network or has an overlapped coverage to the MESH access network, and perform cross-system communication with the inter-system.

As shown in Fig.6, the present disclosure provides in some embodiments an LSC, including: a second transmission module 600 configured to transmit or receive information related to a specific access device; and a second processing module 601 configured to control the second transmission module 600 to transmit the information related to the specific access device between a cellular access network and a core network through a backhaul network. The specific access device is an access device that has accessed a base station or AP connected to the LSC.

In a possible embodiment of the present disclosure, the second processing module 601 is further configured to perform connection management and transmission management over the specific access device.

In a possible embodiment of the present disclosure, the transmission management includes parts or all of the followings: cross-base-station and/or cross-AP interference management; interference coordination or wireless resource coordinate between local access cellular networks which are adjacent or have an overlapped coverage; wireless resource configuration and/or transmission parameter configuration in a multi-base-station and/or multi-AP transmission mode; and wireless resource coordination between the MESH access networks which are adjacent or have an overlapped coverage.

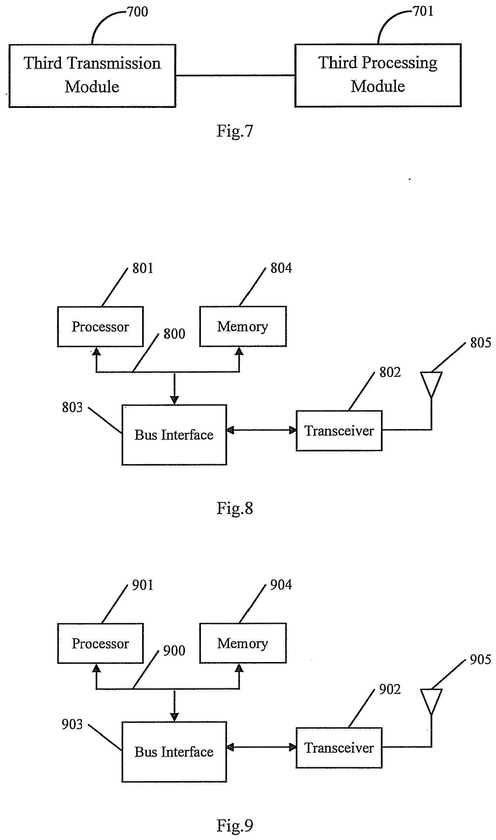

As shown in Fig.7, the present disclosure provides in some embodiments an NSC, including: a third transmission module 700 configured to receive information from a DSC of a MESH access network through a backhaul network, and receive information from an LSC of a cellular access network through the backhaul network; and a third processing module 701 configured to transmit the information received by the third transmission module 700 from the DSC to a core network, and transmit the information received by the third transmission module 700 from the LSC to the core network.

In a possible embodiment of the present disclosure, the third processing module 701 is further configured to: authenticate the DSC and/or the LSC, and after the DSC and/or the LSC have been authenticated successfully, establish a secure tunnel between the core network and the DSC/LSC for the data transmission through the backhaul network; and manage an EP connected to the DSC and a specific access device at a service layer and an identity layer.

As shown in Fig.8, the present disclosure provides in some embodiments a DSC, including: a processor 801, a transceiver 802 and a memory 804. The processor 801 is configured to read a program stored in the memory 804, so as to transmit information related to an EP in a corresponding cluster between a MESH access network and a core network through a backhaul network. The DSC corresponds to at least one cluster, and each EP in the cluster corresponding to the DSC is connected to the DSC. The transceiver 802 is configured to transmit or receive the information related to the EP under the control of the processor 801.

In a possible embodiment of the present disclosure, the processor 801 is further configured to manage the EP in the corresponding cluster, coordinate the communication between the corresponding cluster and an adjacent cluster, and perform interference management.

In a possible embodiment of the present disclosure, the processor 801 is further configured to, in the case that the MESH access network shares a wireless resource with another wireless network, coordinate the interference between the MESH access network and a wireless resource control entity of an inter-system which is located adjacent to the MESH access network or has an overlapped coverage to the MESH access network, and perform cross-system communication with the inter-system.

In Fig.8, bus architecture represented by a bus 800 may include a number of buses and bridges connected to each other, so as to connect various circuits for one or more processors 801 and one or more memories 804. In addition, as is known in the art, the bus architecture may be used to connect any other circuits, such as a circuit for a peripheral device, a circuit for a voltage stabilizer and a power management circuit. Bus interfaces 803 are provided between the bus 800 and the transceiver 802, and the transceiver 802 may consist of one or more elements, i.e., a plurality of transmitters and a plurality of receivers for communication with any other devices over a transmission medium. Data from the processor 801 is transmitted over a wireless medium through an antenna 805. Further, the antenna 805 is configured to receive data and transmit the data to the processor 801. The processor 801 may take charge of managing the bus architecture as well as general processings, and may further provide various functions such as timing, peripheral interfacing, voltage adjustment, power source management and any other control functions. The memory 804 may store therein data desired for the operation of the processor 801.

In a possible embodiment of the present disclosure, the processor 801 may be a Central Processing Unit (CPU), an Application Specific Integrated Circuit (ASIC), a Field-Programmable Gate Array (FPGA) or a Complex Programmable Logic Device (CPLD).

As shown in Fig.9, the present disclosure provides in some embodiments an LSC, including a processor 901, a transceiver 902 and a memory 904. The processor 901 is configured to read a program stored in the memory 904, so as to: transmit information related to a specific access device between a cellular access network and a core network through a backhaul network. The specific access device is an access device that has accessed a base station or AP connected to the LSC. The transceiver 902 is configured to transmit or receive the information related to the specific access device under the control of the processor 901.

In a possible embodiment of the present disclosure, the processor 901 is further configured to perform connection management and transmission management over the specific access device.

In a possible embodiment of the present disclosure, the transmission management includes parts or all of the followings: cross-base-station and/or cross-AP interference management; interference coordination or wireless resource coordinate between local access cellular networks which are adjacent or have an overlapped coverage; wireless resource configuration and/or transmission parameter configuration in a multi-base-station and/or multi-AP transmission mode; and wireless resource coordination between the MESH access networks which are adjacent or have an overlapped coverage.

In Fig.9, bus architecture represented by a bus 900 may include a number of buses and bridges connected to each other, so as to connect various circuits for one or more processors 901 and one or more memories 904. In addition, as is known in the art, the bus architecture may be used to connect any other circuits, such as a circuit for a peripheral device, a circuit for a voltage stabilizer and a power management circuit. Bus interfaces 903 are provided between the bus 900 and the transceiver 902, and the transceiver 902 may consist of one or more elements, i.e., a plurality of transmitters and a plurality of receivers for communication with any other devices over a transmission medium. Data from the processor 901 is transmitted over a wireless medium through an antenna 905. Further, the antenna 905 is configured to receive data and transmit the data to the processor 901. The processor 901 may take charge of managing the bus architecture as well as general processings, and may further provide various functions such as timing, peripheral interfacing, voltage adjustment, power source management and any other control functions. The memory 904 may store therein data desired for the operation of the processor 901.

In a possible embodiment of the present disclosure, the processor 901 may be a CPU, an ASIC, an FPGAor a CPLD.

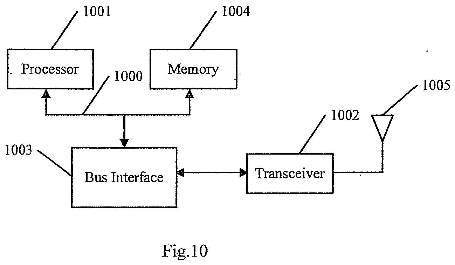

As shown in Fig. 10, the present disclosure provides in some embodiments an NSC, including processor 1001, a transceiver 1002 and a memory 1004. The processor 1001 is configured to read a program stored in the memory 1004, so as to receive, through the transceiver 1002, information from a DSC of a MESH access network through a backhaul network, receive, through the transceiver 1002, information from an LSC of a cellular access network through the backhaul network, transmit, through the transceiver 1002, the information received from the DSC to a core network, and transmit, through the transceiver 1002, the information received from the LSC to the core network. The transceiver 1002 is configured to receive and transmit data under the control of the processor 1001.

In a possible embodiment of the present disclosure, the processor 1001 is further configured to: authenticate the DSC and/or the LSC, and after the DSC and/or the LSC have been authenticated successfully, establish a secure tunnel between the core network and the DSC/LSC for the data transmission through the backhaul network; and manage an EP connected to the DSC and a specific access device at a service layer and an identity layer.

In Fig. 10, bus architecture represented by a bus 1000 may include a number of buses and bridges connected to each other, so as to connect various circuits for one or more processors 1001 and one or more memories 1004. In addition, as is known in the art, the bus architecture may be used to connect any other circuits, such as a circuit for a peripheral device, a circuit for a voltage stabilizer and a power management circuit. Bus interfaces 1003 are provided between the bus 1000 and the transceiver 1002, and the transceiver 1002 may consist of one or more elements, i.e., a plurality of transmitters and a plurality of receivers for communication with any other devices over a transmission medium. Data from the processor 1001 is transmitted over a wireless medium through an antenna 1005. Further, the antenna 1005 is configured to receive data and transmit the data to the processor 1001. The processor 1001 may take charge of managing the bus architecture as well as general processings, and may further provide various functions such as timing, peripheral interfacing, voltage adjustment, power source management and any other control functions. The memory 1004 may store therein data desired for the operation of the processor 1001.

In a possible embodiment of the present disclosure, the processor 1001 may be a CPU, an ASIC, an FPGAor a CPLD.

The present disclosure further provides in some embodiments a communication method for a communication system including a MESH access network, a cellular access network, a backhaul network and a core network, including steps of: transmitting, by a DSC of the MESH access network, information related to an EP in a corresponding cluster between the DSC and the core network through the backhaul network, the DSC being connected to each EP in the corresponding cluster; transmitting, by an LSC of the cellular access network, information related to a specific access device between the LSC and the core network through the backhaul network, the specific access device being an access device that has accessed a base station or AP connected to the LSC; and transmitting, by an NSC of the core network, the information received from the DSC and/or the LSC to the core network through the backhaul network.

According to the embodiments of the present disclosure, through the combination of a traditional MESH network technology and a cellular network technology, it is able to improve the reliability, the security, the QoS guarantee and the support of mobility of the MESH network. Through the combination of the cellular access network and the MESH access network, it is able to further improve the reliability and the spectrum utilization flexibility of the cellular access network. In addition, through the combination of the MESH access network and the cellular access network, it is able to make up for performance deficiencies of a pure MESH system and a pure cellular system in a better manner.

The above are merely the preferred embodiments of the present disclosure, but the present disclosure is not limited thereto.

## Claims

1. A communication system, comprising a self-organizing MESH access network, a cellular access network, a backhaul network and a core network,
wherein the MESH access network is connected to the core network through the backhaul network, and the cellular access network is connected to the core network through the backhaul network,
and the MESH access network comprises a plurality of clusters, and each cluster comprises at least one Distributed Service Center, DSC, and at least one End Point, EP;
the cellular access network comprises a plurality of local access networks, and each local access network comprises at least one Local Service Center, LSC, and at least one base station and/or at least one Access Point, AP;
the core network comprises at least one Network Service Center, NSC;
the at least one DSC is connected to each EP in a corresponding cluster, and configured to transmit information related to the EP in the corresponding cluster between the at least one DSC and the core network through the backhaul network;
the at least one LSC is configured to transmit information related to a specific access device between the at least one LSC and the core network through the backhaul network, and the specific access device is an access device that has accessed a base station or AP connected to the at least one LSC; and
the NSC is configured to transmit information to the core network, wherein the information is received from the at least one DSC and/or the at least one LSC through the backhaul network;
**characterized in that** the at least one DSC is further configured to notify interference information measured by the at least one DSC or by the at least one EP in the cluster to the at least one LSC of the cellular access network which is located adjacent to the MESH access network or has an overlapped coverage with the MESH access network, and the at least one LSC is configured to control a transmission power on the basis of the interference information.

2. The communication system according to claim 1, wherein the clusters are capable of overlapping each other, the local access networks are capable of overlapping each other, and the local access network and the cluster are capable of overlaying each other.

3. The communication system according to claim 1, wherein the MESH access network and the cellular access network use a dedicated frequency for a traditional cellular system or any other public frequency.

4. The communication system according to claim 1, wherein the at least one DSC is further configured to manage the at least one EP in the corresponding cluster, coordinate the communication between the corresponding cluster and an adjacent cluster, and perform interference management.

5. The communication system according to any one of claims 1 to 4, wherein the at least one LSC is further configured to perform connection management and transmission management over the specific access device.

6. The communication system according to claim 5, wherein the transmission management comprises parts or all of the followings:
cross-base-station and/or cross-AP interference management;
interference coordination or wireless resource coordinate between the local access cellular networks which are adjacent or have an overlapped coverage;
wireless resource configuration and/or transmission parameter configuration in a multi-base-station and/or multi-AP transmission mode; and
wireless resource coordination between the MESH access networks which are adjacent or have an overlapped coverage.

7. The communication system according to any one of claims 1 to 4, wherein the NSC is further configured to: authenticate the at least one DSC and/or the at least one LSC, and after the at least one DSC and/or the at least one LSC have been authenticated successfully, establish a secure tunnel between the core network and the at least one DSC and/or between the core network and the at least one LSC for the data transmission through the backhaul network; and manage the at least one EP connected to the at least one DSC and the specific access device at a service layer and an identity layer.

8. A communication method for a communication system comprising a MESH access network, a cellular access network, a backhaul network and a core network, the communication method comprising steps of:
transmitting, by a Distributed Service Center, DSC, of the MESH access network, information related to an End Point, EP, in a corresponding cluster between the DSC and the core network through the backhaul network, the DSC being connected to each EP in the corresponding cluster;
transmitting, by a Local Service Center, LSC, of the cellular access network, information related to a specific access device between the LSC and the core network through the backhaul network, the specific access device being an access device that has accessed a base station or Access Point, AP, connected to the LSC;
transmitting, by a Network Service Center, NSC, of the core network, the information received from the DSC and/or the LSC through the backhaul network; **characterized in that** the method further comprises:
notifying, by the DSC, interference information measured by the DSC or by the EP in the cluster to the LSC of the cellular access network which is located adjacent to the MESH access network or has an overlapped coverage with the MESH access network, and controlling a transmission power on the basis of the interference information by the LSC.

## Patentansprüche

1. Kommunikationssystem mit einem selbstorganisierenden MESH-Zugangsnetzwerk, einem Mobilfunkzugangsnetzwerk, einem Backhaul-Netzwerk und einem Kernnetzwerk,
wobei das MESH-Zugangsnetzwerk über das Backhaul-Netzwerk mit dem Kernnetzwerk verbunden ist, und das Mobilfunkzugangsnetzwerk über das Backhaul-Netzwerk mit dem Kernnetzwerk verbunden ist,
und das MESH-Zugangsnetzwerk mehrere Cluster aufweist, und jeder Cluster mindestens ein **verteiltes Service-Center,** DSC, und mindestens einen Endpunkt, EP, aufweist,
das Mobilfunkzugangsnetzwerk mehrere lokale Zugangsnetzwerke aufweist, und jedes lokale Zugangsnetzwerk mindestens ein lokales Service-Center, LSC, und mindestens eine Basisstation und/oder mindestens einen Zugangspunkt, AP, aufweist,
das Kernnetzwerk mindestens ein Netzwerk-Service-Center, NSC, aufweist,
das mindestens eine DSC mit jedem EP in einem entsprechenden Cluster verbunden ist und dazu ausgebildet ist, den EP in dem entsprechenden Cluster betreffende Informationen zwischen dem mindestens einen DSC und dem Kernnetzwerk über das Backhaul-Netzwerk zu übertragen,
das mindestens eine LSC dazu ausgebildet ist, eine bestimmte Zugangsvorrichtung betreffende Informationen zwischen dem mindestens einen LSC und dem Kernnetzwerk über das Backhaul-Netzwerk zu übertragen, und die bestimmte Zugangsvorrichtung eine Zugangsvorrichtung ist, welche auf eine Basisstation oder einen AP zugegriffen hat, die/der mit dem mindestens einen LSC verbunden ist, und
das NSC dazu ausgebildet ist, Informationen an das Kernnetzwerk zu übertragen, wobei die Informationen über das Backhaul-Netzwerk von dem mindestens einen DSC und/oder dem mindestens einen LSC aus empfangen werden;
**dadurch gekennzeichnet, dass**
das mindestens eine DSC ferner dazu ausgebildet ist, von dem mindestens einen DSC oder dem mindestens einen EP in dem Cluster gemessene Interferenzinformationen an das mindestens eine LSC des Mobilfunkzugangsnetzwerks zu melden, das dem MESH-Zugangsnetzwerk benachbart ist, oder eine mit dem MESH-Zugangsnetzwerk überlappende Abdeckung aufweist, und das mindestens eine LSC dazu ausgebildet ist, eine Übertragungsleistung auf der Basis der Interferenzinformationen zu steuern.

2. Kommunikationssystem nach Anspruch 1, bei welchem die Cluster in der Lage sind, einander zu überlappen, die lokalen Zugangsnetzwerke in der Lage sind, einander zu überlappen, und das lokale Zugangsnetzwerk und der Cluster geeignet sind, einander zu überlappen.

3. Kommunikationssystem nach Anspruch 1, bei welchem das MESH-Zugangsnetzwerk und das Mobilfunkzugangsnetzwerk eine dedizierte Frequenz für ein herkömmliches Mobilfunksystem oder eine beliebige andere öffentliche Frequenz verwenden.

4. Kommunikationssystem nach Anspruch 1, bei welchem das mindestens eine DSC ferner dazu ausgebildet ist, den mindestens einen EP in dem entsprechenden Cluster zu verwalten, die Kommunikation zwischen dem entsprechenden Cluster und einem benachbarten Cluster zu verwalten, und ein Interferenzmanagement durchzuführen.

5. Kommunikationssystem nach einem der Ansprüche 1 bis 4, bei welchem das mindestens LSC ferner dazu ausgebildet ist, ein Verbindungsmanagement und ein Übertragungsmanagement über die bestimmte Zugangsvorrichtung durchzuführen.

6. Kommunikationssystem nach Anspruch 5, bei welchem das Übertragungsmanagement eine Teil oder alle der nachfolgenden Elemente aufweist:
Kreuz-Basisstations- und/oder Kreuz-AP-Interferenzmanagement;
Interferenzkoordination oder Drahtlos-Ressourcenkoordination zwischen den Lokalzugangsmobilfunknetzwerken, welche einander benachbart sind oder eine überlappende Abdeckung aufweisen;
Drahtlos-Ressourcenkonfiguration und/oder Übertragungsparameterkonfiguration in einem Multi-Basisstations- und/oder einem Multi-AP-Übertragungsmodus; und
Drahtlos-Ressourcenkoordination zwischen den MESH-Zugangsnetzwerken, welche einander benachbart sind oder eine überlappende Abdeckung aufweisen.

7. Kommunikationssystem nach einem der Ansprüche 1 bis 4, bei welchem das NSC ferner dazu ausgebildet ist, das mindestens eine DSC und/oder das mindestens eine LSC zu authentifizieren, und nach dem erfolgreichen Authentifizieren des mindestens einen DSC und/oder des mindestens einen LSC, einen sicheren Tunnel zwischen dem Kernnetzwerk und dem wenigstens einen DSC und/oder zwischen dem Kernnetzwerk und dem mindestens einen LSC für die Datenübertragung über das Backhaul-Netzwerk zu bilden, und den mindestens einen mit dem mindestens einen DSC und der bestimmten Zugangsvorrichtung verbundenen EP auf einer Serviceebene und einer Identitätsebene zu verwalten.

8. Kommunikationsverfahren für ein Kommunikationssystem mit einem selbstorganisierenden MESH-Zugangsnetzwerk, einem Mobilfunkzugangsnetzwerk, einem Backhaul-Netzwerk und einem Kernnetzwerk, wobei Kommunikationsverfahren die folgenden Schritte aufweist:
Übertragen, durch ein verteiltes Service-Center, DSC, des MESH-Zugangsnetzwerks, von Informationen bezüglich eines Endpunkts, EP, in einem entsprechenden Cluster zwischen dem DSC und dem Kernnetzwerk über das Backhaul-Netzwerk, wobei das DSC mit jedem EP in dem entsprechenden Cluster verbunden ist;
Übertragen, durch ein lokales Service-Center, LSC, des Mobilfunknetzwerks, von Informationen bezüglich einer bestimmten Zugangsvorrichtung zwischen dem LSC und dem Kernnetzwerk über das Backhaul-Netzwerk, wobei die bestimmte Zugangsvorrichtung eine Zugangsvorrichtung ist, welche auf eine Basisstation oder einen Zugangspunkt AP, die mit dem LSC verbunden sind, zugegriffen hat;
Übertragen, durch ein Netzwerk-Service-Center, NSC, des Kernnetzwerks, der von dem DSC und/oder dem LSC empfangenen Informationen über das Backhaul-Netzwerk;
**dadurch gekennzeichnet, dass** das Verfahren ferner die folgenden Schritte aufweist:
Melden, durch das DSC, von Interferenzinformationen, welche von dem DSC oder dem EPO in dem Cluster gemessen werden, an das LSC des Mobilfunknetzwerks, das dem MESH-Zugangsnetzwerk benachbart angeordnet ist oder eine mit dem MESH-Zugangsnetzwerk überlappende Abdeckung aufweist, und Steuern einer Übertragungsleistung durch das LSC auf der Basis der Interferenzinformationen.

## Revendications

1. Système de communication, comprenant un réseau d'accès MESH auto-organisateur, un réseau d'accès cellulaire, un réseau de liaison terrestre et un réseau central,
dans lequel le réseau d'accès MESH est connecté au réseau central par le biais du réseau de liaison terrestre, et le réseau d'accès cellulaire est connecté au réseau central par le biais du réseau de liaison terrestre,
et le réseau d'accès MESH comprend une pluralité de grappes, et chaque grappe comprend au moins un centre de service distribué, DSC, et au moins un point d'extrémité, EP ;
le réseau d'accès cellulaire comprend une pluralité de réseaux d'accès locaux, et chaque réseau d'accès local comprend au moins un centre de services local, LSC, et au moins une station de base et/ou au moins un point d'accès, AP ;
le réseau central comprend au moins un centre de service réseau, NSC ;
l'au moins un DSC est connecté à chaque EP dans une grappe correspondante, et configuré pour transmettre des informations relatives à l'EP dans la grappe correspondante entre l'au moins un DSC et le réseau central par le biais du réseau de liaison terrestre ;
l'au moins un LSC est configuré pour transmettre des informations relatives à un dispositif d'accès spécifique entre l'au moins un LSC et le réseau central par le biais du réseau de liaison terrestre, et le dispositif d'accès spécifique est un dispositif d'accès qui a accédé à une station de base ou à un AP connecté à l'au moins un LSC ; et
le NSC est configuré pour transmettre des informations au réseau central, les informations étant reçues de l'au moins un DSC et/ou de l'au moins un LSC par le biais du réseau de liaison terrestre ;
**caractérisé en ce que** l'au moins un DSC est en outre configuré pour notifier d'informations d'interférence mesurées par l'au moins un DSC ou par l'au moins un EP de la grappe à l'au moins un LSC du réseau d'accès cellulaire qui est situé à côté du réseau d'accès MESH ou présente une couverture en chevauchement avec le réseau d'accès MESH, et l'au moins un LSC est configuré pour contrôler une puissance de transmission sur la base des informations d'interférence.

2. Système de communication selon la revendication 1, dans lequel les grappes sont capables peuvent se chevaucher, les réseaux d'accès locaux peuvent se chevaucher, et le réseau d'accès local et la grappe peuvent se chevaucher.

3. Système de communication selon la revendication 1, dans lequel le réseau d'accès MESH et le réseau d'accès cellulaire utilisent une fréquence dédiée pour un système cellulaire traditionnel ou toute autre fréquence publique.

4. Système de communication selon la revendication 1, dans lequel l'au moins un DSC est en outre configuré pour gérer l'au moins un EP dans la grappe correspondante, coordonner la communication entre la grappe correspondante et une grappe adjacente et effectuer une gestion des interférences.

5. Système de communication selon l'une quelconque des revendications 1 à 4, dans lequel l'au moins un LSC est en outre configuré pour effectuer une gestion de connexion et une gestion de transmission sur le dispositif d'accès spécifique.

6. Système de communication selon la revendication 5, dans lequel la gestion de transmission comprend une partie ou la totalité des éléments suivants :
la gestion des interférences de station de base croisées et/ou d'AP croisées ;
la coordination des interférences ou la coordination des ressources sans fil entre les réseaux cellulaires d'accès local qui sont adjacents ou qui ont une couverture en chevauchement ;
la configuration de ressources sans fil et/ou la configuration de paramètres de transmission dans un mode de transmission multi-stations de base et/ou multi-AP ; et
la coordination des ressources sans fil entre les réseaux d'accès MESH qui sont adjacents ou qui ont une couverture en chevauchement.

7. Système de communication selon l'une quelconque des revendications 1 à 4, dans lequel le NSC est en outre configuré pour :
authentifier l'au moins un DSC et/ou l'au moins un LSC, et après que l'au moins un DSC et/ou l'au moins un LSC ont été authentifiés avec succès, établir un tunnel sécurisé entre le réseau central et l'au moins un DSC et/ou entre le réseau central et l'au moins un LSC pour la transmission de données à travers le réseau de liaison terrestre ; et
gérer l'au moins un EP connecté à l'au moins un DSC et le dispositif d'accès spécifique au niveau d'une couche de service et d'une couche d'identité.

8. Procédé de communication pour un système de communication comprenant un réseau d'accès MESH, un réseau d'accès cellulaire, un réseau de liaison terrestre et un réseau central, le procédé de communication comprenant les étapes de :
transmission, par un centre de service distribué, DSC, du réseau d'accès MESH, d'informations relatives à un point d'extrémité, EP, dans une grappe correspondante entre le DSC et le réseau central par le biais du réseau de liaison terrestre, le DSC étant connecté à chaque EP dans la grappe correspondante ;
transmission, par un centre de services local, LSC, du réseau d'accès cellulaire, d'informations relatives à un dispositif d'accès spécifique entre le LSC et le réseau central par le biais du réseau de liaison terrestre, le dispositif d'accès spécifique étant un dispositif d'accès ayant accédé à une station de base ou à un point d'accès, AP, connecté au LSC ;
transmission, par un centre de service réseau, NSC, du réseau central, des informations reçues du DSC et/ou du LSC à travers le réseau de liaison terrestre ;
**caractérisé en ce que** le procédé comprend en outre :
la notification, par le DSC, des informations d'interférence mesurées par le DSC ou par le PE dans la grappe au LSC du réseau d'accès cellulaire qui est situé à côté du réseau d'accès MESH ou qui a une couverture en chevauchement avec le réseau d'accès MESH, et le contrôle d'un puissance de transmission sur la base des informations d'interférence par le LSC.
